**Europäisches Patentamt**

(19) **European Patent Office**

**Office européen des brevets**

(11) Veröffentlichungsnummer: **0 118 701**
**A2**

(12) **EUROPÄISCHE PATENTANMELDUNG**

(21) Anmeldenummer: **84100845.1**

(22) Anmeldetag: **27.01.84**

(51) Int. Cl.³: **F 28 F 9/14**

(30) Priorität: **09.03.83 DE 3308349**

(43) Veröffentlichungstag der Anmeldung:
**19.09.84** Patentblatt **84/38**

(84) Benannte Vertragsstaaten:
**DE FR GB IT SE**

(71) Anmelder: **Süddeutsche Kühlerfabrik Julius Fr. Behr GmbH & Co. KG.**
**Mauserstrasse 3**
**D-7000 Stuttgart 30(DE)**

(72) Erfinder: **Kluna, Vlastimil, Ing.grad.**
**Albstrasse 33**
**D-7014 Kornwestheim(DE)**

(72) Erfinder: **Kuchelmeister, Reinhold, Ing.grad.**
**Hoher Weg 14**
**D-7035 Waldenbuch(DE)**

(54) **Verbindungsanordnung für metallische Rohre eines Wärmetauschers mit einem Rohrboden und Verfahren zu deren Herstellung.**

(57) Bei Wärmetauschern, deren metallische Wärmetauscherrohre (4) in einem Rohrboden eines Wasserkastens (1) mittels einer Querpreßsitzverbindung befestigt und abgedichtet werden sollen, sind bisher nur bei solchen Wärmetauschern gute Ergebnisse erzielt worden, bei denen der Rohrboden (2) aus Metall besteht. Bei aus Kunststoff bestehenden Rohrböden (2) sind bisher Dichtungsringe zur Abdichtung der Rohre (4) im Rohrboden (2) verwendet worden. Es wird daher eine Verbindungsanordnung für metallische Rohre (4) eines Wärmetauschers mit einem Rohrboden (2) eines Wasserkastens (1) vorgeschlagen, wobei die Enden (4') der Rohre (4) in Öffnungen (3) des Rohrbodens (2) durch eine Querpreßsitzverbindung befestigt und abgedichtet sind und der Rohrboden (2) aus einem thermoplastischen Kunststoff besteht, der integraler Bestandteil des Wasserkastens (1) ist. Die Befestigung und Abdichtung erfolgt mittels Schrumpfen des Rohrbodens (2) auf die Enden (4') der Rohre (4).

FIG.1

**0118701**
6.12.1983
82-B-24 EP
EZDP/Ri/wi

Süddeutsche Kühlerfabrik Julius Fr. Behr GmbH & Co. KG
Mauserstr. 3, 7ooo Stuttgart 3o

Verbindungsanordnung für metallische Rohre eines
Wärmetauschers mit einem Rohrboden und Verfahren
zu deren Herstellung

Die Erfindung bezieht sich auf eine Verbindungsanordnung für metallische Rohre eines Wärmetauschers mit einem Rohrboden eines Wasserkastens, wobei die Enden der Rohre in Öffnungen des Rohrbodens durch eine Querpreßsitzverbindung befestigt und abgedichtet sind.

Aus der DE-OS 24 48 332 ist bereits eine Verbindungsanordnung für Wärmetauscherrohre mit einem Rohrboden eines Wasserkastens bekannt, bei der die Rohre durch radiales Aufweiten in einem metallischen Rohrboden befestigt und abgedichtet sind. Diese Maßnahme hat sich bei Wärmetauschern mit metallischen Rohrböden bewährt; sie ist jedoch nur dann möglich, wenn der Rohrboden ein separates Bauteil des Wasserkastens ist und der Wasserkasten erst nach Herstellung der Verbindung aufgesetzt wird. Somit ist bei der bekannten Verbindungsanordnung der Wasserkasten mit dem Rohrboden nicht als einstückiges Spritzgußteil aus Kunststoffmaterial herstellbar.

Aus der DE-AS 24 35 632 ist ein Wärmetauscher bekannt, bei dem die Wasserkästen aus einem rohrförmigen Kunststoffteil bestehen, wobei der Rohrboden integraler Bestandteil des Wasserkastens ist. Der Wasserkasten weist eine Vielzahl von Öffnungen auf, die jeweils mit einer Gummidichtung versehen sind, in die die Enden der Wärmetauscherrohre gesteckt sind. Die Dichtungen haben dabei die Aufgabe, einen Austritt des Wärmetauscherfluids zu verhindern; der Wasserkasten wird dadurch jedoch nicht auf dem Wärmetauscherblock befestigt. Zur Befestigung der Wasserkästen sind seitliche Befestigungselemente in Form von Rahmenteilen vorgesehen, die die Wasserkästen und den dazwischenliegenden Wärmetauscherblock miteinander verspannen. Eine Preßsitzverbindung zwischen dem Rohrboden und den Wärmetauscherrohren ist bei einer derartigen Anordnung nicht möglich, so daß stets die zur Verspannung notwendigen Rahmenteile benötigt werden.

Es ist daher die Aufgabe der Erfindung, eine Verbindungsanordnung der im Oberbegriff des Anspruchs 1 bezeichneten Gattung zu schaffen, die für aus Kunststoff bestehende Wasserkästen mit integriertem Rohrboden geeignet ist und neben einer zuverlässigen Abdichtung auch eine hohe mechanische Festigkeit ohne separate Befestigungsmittel gewährleistet. Es ist außerdem die Aufgabe der Erfindung, ein Verfahren zur Herstellung einer Verbindungsanordnung der gattungsgemäßen Art zu entwickeln.

Diese Aufgabe wird bei einer Verbindungsanordnung der gattungsgemäßen Art durch die kennzeichnenden Merkmale des Anspruchs 1 gelöst. Das Verfahren zur Herstellung der erfindungsgemäßen Verbindungsanordnung ist durch die Merkmale des Anspruchs 9 gekennzeichnet.

0118701
82-B-24 EP
EZDP/Ri/wi

Die wesentlichen Vorteile des Erfindungsgegenstandes sind insbesondere darin zu sehen, daß bei einstückigen Wasserkästen auf einfache Weise eine sichere Befestigung und Abdichtung von Wärmetauscherrohren möglich ist, wobei es völlig gleichgültig ist, ob die Rohre kreisförmigen, ovalen oder elliptischen Querschnitt besitzen.

Gemäß einer vorteilhaften Weiterbildung des Erfindungsgegenstandes weisen die Öffnungen vor dem Aufschrumpfen einen Konus auf, dessen Ende mit größerer Querschnittsfläche auf der dem Wärmetauscherblock zugewandten Seite des Rohrbodens liegt. Diese Maßnahme hat den Vorteil, daß einerseits das Ausformen des Dornes und später das Einführen des Wärmetauscherrohres erleichtert wird.

Je nach Anwendungsfall kann zwischen der Wandung der Öffnungen und den Mantelflächen der Rohrenden je eine Gummidichtung angeordnet sein. Sofern eine derartige Gummidichtung vorgesehen ist, ist es von Vorteil, daß die Öffnungen in dem dem Wasserkasteninnenraum benachbarten Bereich eine zylindrische Erweiterung aufweisen. Dadurch ergibt sich eine Kante des Kunststoffmaterials, die sich in die Gummidichtung eingräbt und diese gegen Herausquetschen sichert.

Falls auf eine zusätzliche Gummidichtung verzichtet wird, sind die Öffnungen so bemessen, daß sie ursprünglich eine mindestens teilweise geringere Querschnittsfläche als die Rohraußenquerschnittsfläche aufweisen und durch Wärmebehandlung die Öffnungen vorübergehend aufgeweitet sind.

Zur Erhöhung der Anzahl der Dichtkanten je Verbindungsanordnung ist es von Vorteil, daß die Enden der Rohre an ihren Mantelflächen mindestens eine in Umfangsrichtung verlaufende Rille aufweisen. Auf diese Weise wird zwischen dem Rohrboden und den Rohrenden zusätzlich ein Formschluß erreicht. Für das erfindungsgemäße Verfahren haben sich als Werkstoff für den Wasserkasten teilkristalline Werkstoffe, insbesondere Polyamid mit bis zu 3o % Glasfaseranteil, als geeignet erwiesen.

Die Erfindung ist nachstehend anhand der Zeichnung näher erläutert.

In der Zeichnung zeigt:

Figur 1                einen Schnitt durch einen Wasserkasten
                       mit der erfindungsgemäßen Verbindungsanordnung in perspektivischer Ansicht,

Figur 2 a - 2 e        die Verfahrensschritte zur Herstellung
                       der Verbindungsanordnung,

Figur 3 a - 3 f        eine Ausführungsvariante zu Figur 2
                       mit eingelegter Gummidichtung,

Figur 4                eine vergrößerte Darstellung der Einzelheit X in Figur 1,

Figur 5                einen Schnitt nach der Linie V-V in
                       Figur 1.

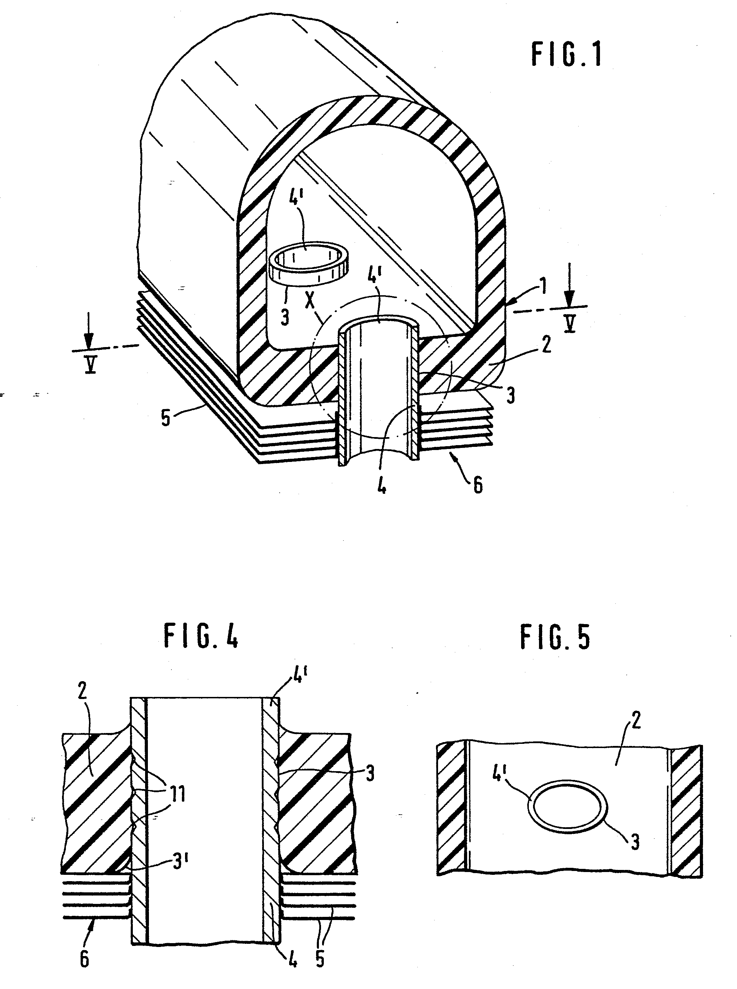

In Figur 1 ist ein aus Kunststoff bestehender Wasserkasten 1 mit integriertem Rohrboden 2 dargestellt, in dem Öffnungen 3 vorgesehen sind. In den Öffnungen 3 befinden sich Rohrenden 4' von metallischen Rohren 4 eines aus Rohren und Rippen 5 bestehenden Wärmetauscherblocks 6. Sowohl die Öffnungen 3 wie auch die Enden 4' der Rohre 4 haben eine ovale Querschnittsfläche. Der Rohrboden 2 ist auf die Rohrenden 4' aufgeschrumpft.

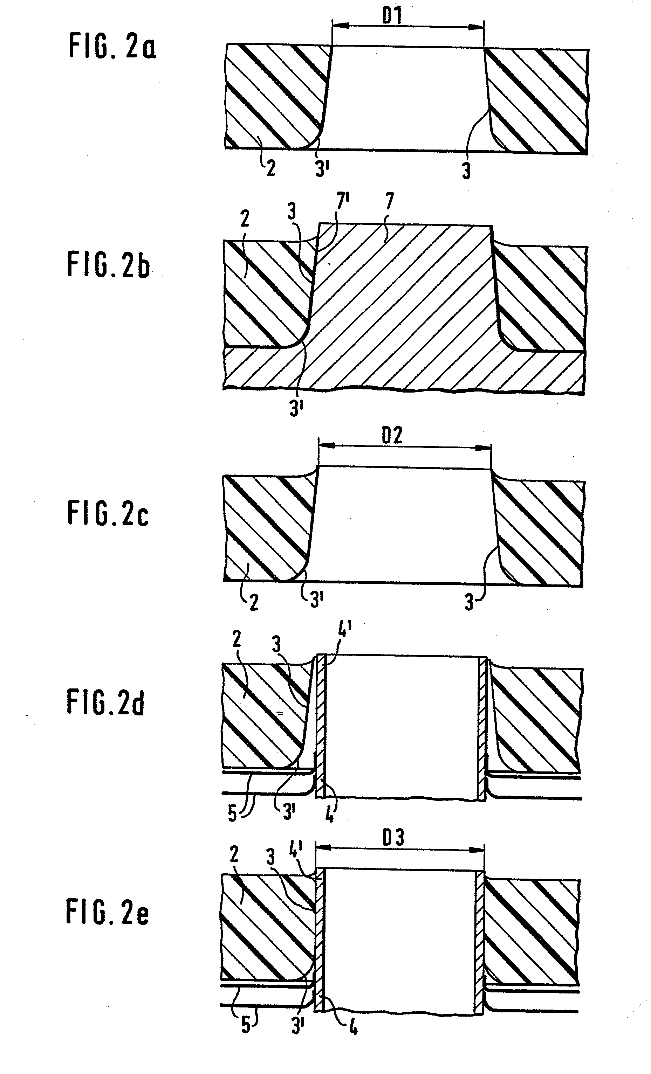

Das Verfahren zur Herstellung der Verbindungsanordnung mittels Schrumpfen ist nachstehend anhand der Figuren 2 a

0121R701
82-B-24 EP
EZDP/Ri/wi

bis 2 e am Beispiel kreisrunder Wärmetauscherrohre näher erläutert.

In Figur 2 a ist ein Ausschnitt des Rohrbodens 2 mit einer Öffnung 3 in der Form dargestellt, welche die Öffnung 3 vor dem Herstellen der Verbindungsanordnung einnimmt. Die Öffnung 3 ist konisch ausgebildet, wobei das Ende mit geringerer Querschnittsfläche den Durchmesser D 1 aufweist und das andere Ende der Öffnung mit einer Abrundung 3' versehen ist.

Figur 2 b zeigt den Rohrboden 2 während einer ersten Wärmebehandlung, durch die das Kunststoffmaterial des Rohrbodens 2 auf seine Erweichungstemperatur gebracht wird. Im erweichten Zustand des Kunststoffmaterials wird in die Öffnung 3 ein Dorn 7 eingedrückt, der eine der Öffnung 3 entsprechende kegelstumpfförmige Mantelfläche 7' aufweist, deren Maß jedoch etwas größer ist als das der Öffnung 3. Aufgrund des Übermaßes des Dornes 7 wird das erweichte Kunststoffmaterial verformt und somit die Öffnung 3 aufgeweitet. Der Rohrboden 2 wird dann mit dem in der Öffnung 3 befindlichen Dorn 7 etwa auf Raumtemperatur abgekühlt.

Nach dem Abkühlen des Rohrbodens 2 wird der Dorn 7 entfernt, wobei - wie in Figur 2 c dargestellt - die Öffnung 3 des Rohrbodens 2 die aufgeweitete Form beibehält und nunmehr das Ende der Öffnung 3 mit geringerer Querschnittsfläche des Konus einen Durchmesser D 2 besitzt.

Figur 2 d zeigt den Rohrboden 2 mit einem in die Öffnung 3 eingeführten Ende 4' eines Wärmetauscherrohres 4. Das Wärmetauscherrohr 4 wird soweit in die Öffnung 3 gesteckt, daß das Ende 4' über den Rohrboden 2 hinaus in das innere des Wasserkastens ragt. Die oberste Rippe 5 befindet sich dann in geringem Abstand zum Rohrboden 2.

0118701
6.12.1983
82-B-24
EZDP/Ri/wi

Nachdem das Wärmetauscherrohr 4 in die Öffnung 3 des Rohrbodens 2 eingeführt ist, wird der Rohrboden 2 einer weiteren Wärmebehandlung unterzogen, durch die das Kunststoffmaterial wiederum auf seine Erweichungstemperatur gebracht wird. Aufgrund des sogenannten Formgedächtnisses des Kunststoffes versucht das Material bei Erweichen seine ursprüngliche Form wieder anzunehmen, so daß die Öffnung 3 schrumpft und das Kunststoffmaterial die Rohraußenwandung nach Art eines Querpreßsitzes dichtend umschließt. Es ist somit eine Schrumpfverbindung zwischen Rohrboden 2 und Wärmetauscherrohr 4 erzeugt, die eine große mechanische Festigkeit bei guter Abdichtung aufweist. Im fertigen Zustand der Verbindungsanordnung weist demnach der Innendurchmesser der Öffnung 3 einen Durchmesser D 3 auf, der dem Rohraußendurchmesser entspricht (D 2 > D3 > D 1).

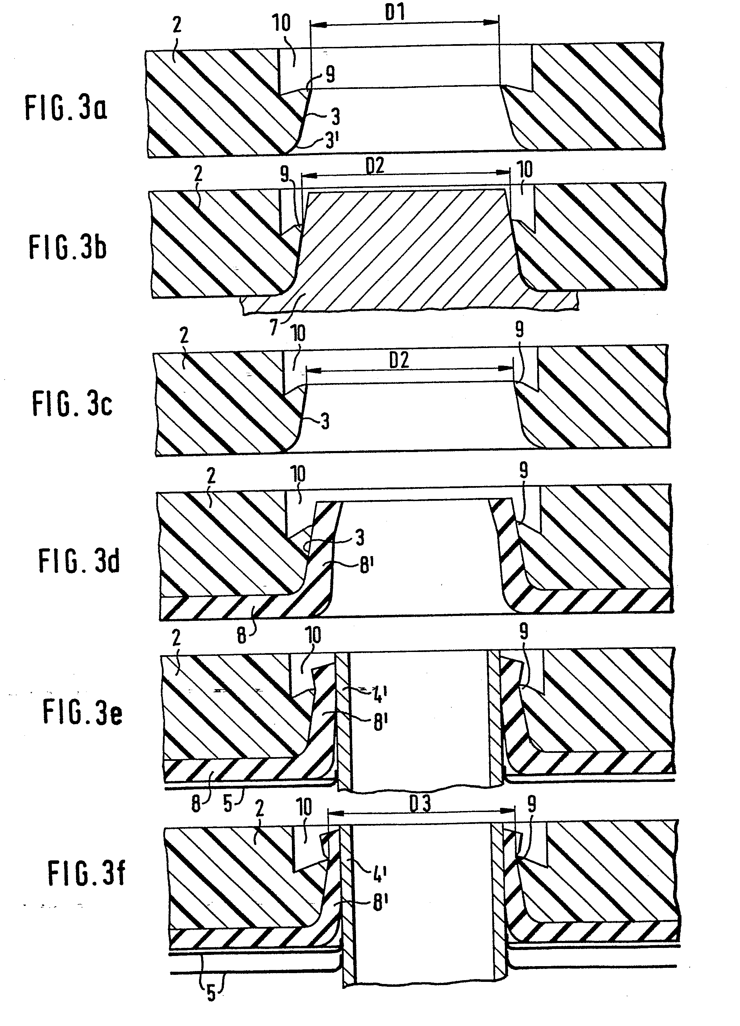

In Figur 3 a bis 3 f ist ein ähnliches Verfahren zur Herstellung der Verbindungsanordnung dargestellt, das sich lediglich dadurch unterscheidet, daß zusätzlich zwischen Rohrboden 2 und dem Ende 4' des Wärmetauscherrohres ein Dichtungsring 8' eingelegt ist. Wie Figur 3 a zeigt, weist die konische Öffnung 3 auf der dem Innenraum des Wasserkastens zugewandten Seite eine zylindrische Erweiterung 1o auf, wobei durch die Erweiterung 1o an dem Ende geringen Querschnitts des Konus eine Spitze 9 gebildet wird. Der Durchmesser der Öffnung 3 an dieser Spitze 9 ist mit D 1 bezeichnet.

Figur 3 b zeigt den Rohrboden 2 während der ersten Wärmebehandlung mit dem in der Öffnung 3 befindlichen Dorn 7. Wie aus dieser Darstellung ersichtlich ist, wird die Öffnung 3 auf den Durchmesser D 2 aufgeweitet, wodurch ebenfalls eine Verformung der Spitze 9 erfolgt.

6.12.1983
8 01 18 701
EZDP/Ri/wi

Figur 3 c zeigt den Rohrboden 2 im erkalteten Zustand mit bereits ausgeformten Dorn 7.

Figur 3 d zeigt den Rohrboden 2 mit einer aus Gummimaterial bestehenden Platte 8, die für jede Öffnung 3 einen Dichtungsring 8' aufweist. Dieser Dichtungsring 8' ragt durch die Öffnung 3 bis in die Höhe der zylindrischen Erweiterung 1o.

Nachdem der Rohrboden 2 mit der elastischen Platte 8 versehen ist, wird das Rohrende 4' in die Öffnung 3 des Rohrbodens 2 gesteckt. Dadurch wird das auf die Wasserkasteninnenseite gerichtete Ende des Dichtungsringes 8' etwas verformt, wodurch sich die Spitze 9 geringfügig in das Gummimaterial eingräbt. Es folgt anschließend wiederum eine Wärmebehandlung des Rohrbodens 2, wodurch das Kunststoffmaterial - wie bereits zu Figur 2 e beschrieben - bei Erreichen seiner Erweichungstemperatur wieder seine ursprüngliche Form einzunehmen versucht. Beim Erweichen schrumpft somit das Kunststoffmaterial auf den Durchmesser D 3 und quetscht somit den Dichtungsring 8' um einen bestimmten Betrag zusammen. Der Durchmesser D 3 liegt dabei wiederum zwischen dem ursprünglichen Durchmesser D 1 und dem aufgeweiteten Durchmesser D 2. Durch das Schrumpfen gräbt sich die Spitze 9 weiter in das Gummimaterial des Dichtungsringes 8' ein und verhindert somit mit Sicherheit ein Lösen des Dichtungsringes 8'.

In Figur 4 ist die Einzelheit X aus Figur 1 vergrößert dargestellt. Wie aus dieser Darstellung zu ersehen ist, sind an der Mantelfläche des Rohrendes 4' drei in Umfangsrichtung verlaufende Rillen 11 angeordnet. Die Öffnung 3 im Rohrboden 2 weist auf der dem Wärmetauscherblock 6 zugewandten Seite eine Abrundung 3' auf. Von dieser Abrundung 3' abgesehen, liegt das Kunststoffmaterial des Rohrbodens 2 über die gesamte Länge der Öffnung 3 dicht an der Mantelfläche des Rohrendes 4' an und greift teilweise auch in die Ril-

-8-

len 11 an der Mantelfläche des Rohrendes 4. Es ergeben sich durch diese Rillen 11 mehrere Dichtkanten und außerdem trägt der dadurch erzeugte Formschluß zu einer erhöhten Festigkeit der Verbindungsanordnung bei.

Figur 5 zeigt einen Schnitt nach der Linie V-V in Figur 1. Aus dieser Darstellung ist ersichtlich, daß die Öffnung 3 und das Rohr 4 einen ovalen Querschnitt aufweisen.

Die Erweichungstemperatur für den beispielsweise angegebenen Werkstoff Polyamid beträgt je nach Glasfaseranteil ca. 180°C bis 240° C.

Als Material der Dichtungsplatte sind für diesen Temperaturbereich beispielsweise Viton oder PTFE geeignet.

0118701
6.12.1983
82-B-24 EP
EZDP/Ri/wi

Süddeutsche Kühlerfabrik Julius Fr. Behr GmbH & Co. KG
Mauserstr. 3, 7000 Stuttgart 30

P a t e n t a n s p r ü c h e

1. Verbindungsanordnung für metallische Rohre eines Wärmetauschers mit einem Rohrboden eines Wasserkastens, wobei die Enden der Rohre in Öffnungen des Rohrbodens durch eine Querpreßsitzverbindung befestigt und abgedichtet sind, d a d u r c h   g e k e n n z e i c h n e t , daß der Rohrboden (2) aus einem thermoplastischen Kunststoff besteht und integraler Bestandteil des Wasserkastens (1) ist und die Befestigung und Abdichtung mittels Schrumpfen des Rohrbodens (2) auf die Enden (4') der Rohre (4) erfolgt.

2. Verbindungsanordnung nach Anspruch 1 , d a d u r c h   g e k e n n z e i c h n e t , daß die Öffnungen (3) vor dem Aufschrumpfen einen Konus aufweisen, dessen Ende mit größerer Querschnittsfläche auf der dem Wärmetauscherblock (6) zugewandten Seite des Rohrbodens (2) liegt.

3. Verbindungsanordnung nach einem der vorhergehenden Ansprüche , d a d u r c h   g e k e n n z e i c h n e t , daß zwischen der Wandung der Öffnungen (3) und den Mantelflächen der Rohrenden (4') je eine Gummidichtung (Dichtungsring 8') angeordnet ist.

0118701

6.12.1983
82-B-24 EP
EZDP/Ri/wi

4. Verbindungsanordnung nach Anspruch 3, d a d u r c h
g e k e n n z e i c h n e t , daß die Öffnungen (3) in
dem dem Wasserkasteninnenraum benachbarten Bereich
eine zylindrische Erweiterung (1o) aufweisen.

5. Verbindungsanordnung nach Anspruch 1 oder 2, d a -
d u r c h   g e k e n n z e i c h n e t, daß die
Öffnungen (3) vor der Verbindung der Rohre (4) mit
dem Rohrboden (2) mindestens teilweise eine geringere
Querschnittsfläche als die Rohraußenquerschnittsfläche
aufweisen und durch Wärmebehandlung die Öffnungen (3)
vorübergehend aufgeweitet sind.

6. Verbindungsanordnung nach einem der vorhergehenden Ansprüche , d a d u r c h   g e k e n n z e i c h n e t ,
daß die Enden (4') der Rohre (4) an ihren Mantelflächen
mindestens eine in Umfangsrichtung verlaufende Rille (11)
aufweisen.

7. Verbindungsanordnung nach einem der vorhergehenden Ansprüche , d a d u r c h   g e k e n n z e i c h n e t ,
daß die Rohre (3) einen ovalen oder elliptischen Querschnitt aufweisen.

8. Verbindungsanordnung nach einem der vorhergehenden Ansprüche , d a d u r c h   g e k e n n z e i c h n e t ,
daß der Wasserkasten (1) mit integriertem Rohrboden (2)
aus teilkristallinen Werkstoffen, vorzugsweise aus Polyamid mit bis zu 3o % Glasfaseranteil, besteht.

0118701
6.12.1983
82-B-24 EP
EZDP/Ri/wi

9. Verfahren zur Herstellung einer Verbindungsanordnung nach Anspruch 1 , d a d u r c h   g e k e n n - z e i c h n e t , daß der Rohrboden (2) auf seine Erweichungstemperatur erwärmt wird und die Öffnungen (3) mit je einem Dorn (7) auf eine größere Querschnittsfläche aufgeweitet werden, danach eine Abkühlung des Rohrbodens (2) mit den in den Öffnungen (3) befindlichen Dornen (7) etwa auf Raumtemperatur und anschließend das Entfernen der Dorne (7) aus den Öffnungen (3) erfolgt, daß dann die Enden (4') der Wärmetauscherrohre (4) in die Öffnungen (3) des Rohrbodens (2) gesteckt werden und der Rohrboden (2) wieder auf seine Erweichungstemperatur gebracht wird, dadurch ein Schrumpfen des Kunststoffmaterials und schließlich durch Abkühlung eine Fixierung des Rohrbodens (2) auf den Enden (4') der Wärmetauscherrohre (4) erfolgt.

1o. Verfahren nach Anspruch 9 , d a d u r c h   g e - k e n n z e i c h n e t , daß in die Öffnungen (3) des Rohrbodens (2) vor dem Einstecken der Wärmetauscherrohre (4) eine Gummidichtung (Dichtungsring 8') eingelegt wird.

**FIG.1**

**FIG.4**

**FIG.5**

0118701

FIG. 2a

FIG.2b

FIG.2c

FIG.2d

FIG.2e

FIG.3a

FIG.3b

FIG.3c

FIG.3d

FIG.3e

FIG.3f